# EUROPÄISCHE PATENTANMELDUNG

(11) **EP 1 607 264 A1**
(43) Veröffentlichungstag der Anmeldung: **21.12.2005**
(21) Anmeldenummer: 05104450.1
(22) Anmeldetag: 25.05.2005
(51) Int. Cl.: B60K 31/00

(54) **Spurwechselassistent für Kraftfahrzeuge**

(30) Priorität: 17.06.2004 DE 102004029369
(71) Anmelder: ROBERT BOSCH GMBH, 70442 Stuttgart (DE)
(72) Erfinder: Ewerhart, Frank, 74189, Weinsberg (DE); Guenther, Clemens, 76275, Ettlingen (DE); Wittig, Thomas, 71139, Ehningen (DE)

(57) **Zusammenfassung**

Spurwechselasistent für Kraftfahreuge mit einem Geschwindigkeitsregelsystem (10) und einer Umfeldsensorik (18) zur Erfassung des Verkehrsumfelds einschließlich des Verkehrs auf einer Nebenspur, mit einer Entscheidungseinrichtung (24) zur Entscheidung, ob ein Spurwechselwunsch des Fahrers anzunehmen ist, und einer Befehlseinrichtung (28), die im Falle eines Spurwechselwunsches einen Beschleunigungsbefehl an das Geschwindigkeitsregelsystem ausgibt, dadurch gekennzeichnet, daß eine Erkennungseinrichtung (26) dazu ausgebildet ist, anhand der Daten der Umfeldsensorik (18) ein Fenster für ein gefahrloses Einscheren auf die Nebenspur zu erkennen, und daß die Befehlseinrichtung (28) dazu ausgebildet ist, eine an das Fenster angepaßte Beschleunigungsstrategie einschließlich eines Zeitpunkts für den Beschleunigungsbeginn zu berechnen.

## Beschreibung

### Stand der Technik

Die Erfindung betrifft einen Spurwechselassistenten für Kraftfahrzeuge mit einem Geschwindigkeitsregelsystem und einer Umfeldsensorik zur Erfassung des Verkehrsumfelds einschließlich des Verkehrs auf einer Nebenspur, mit einer Entscheidungseinrichtung zur Entscheidung, ob ein Spurwechselwunsch des Fahrers anzunehmen ist, und einer Befehlseinrichtung zur Ausgabe eines Beschleunigungsbefehls an das Geschwindigkeitsregelsystem.

Ein Spurwechselassistent dieser Art ist z. B. aus DE 101 14 187 A1 bekannt und wird in Verbindung mit einem Geschwindigkeitsregelsystem, beispielsweise einem sogenannten ACC-System (Adaptive Cruise Control) eingesetzt, das nicht nur in der Lage ist, die Geschwindigkeit des Fahrzeugs auf eine vom Fahrer gewählte Wunschgeschwindigkeit zu regeln, sondern auch in der Lage ist, die Geschwindigkeit des eigenen Fahrzeugs erforderlichenfalls an die Geschwindigkeit des vorausfahrenden Fahrzeugs anzupassen, so daß dieses in einem geeigneten Sicherheitsabstand verfolgt wird. Zu diesem Zweck ist eine Umfeldsensorik, beispielsweise in der Form eines Radarsensors vorhanden, mit dem die Abstände und auch die Relativgeschwindigkeiten vorausfahrender Fahrzeuge gemessen werden können. Solche ACC-Systeme sind insbesondere für Fahrten auf mehrspurigen Schnellstraßen oder Autobahnen vorgesehen.

Der Spurwechselassistent dient dazu, dem Fahrer den Wechsel auf eine Nebenspur zu erleichtern, beispielsweise, wenn er einen Überholvorgang einleiten will.

Der aus der oben genannten Druckschrift bekannte Spurwechselassistent ist so ausgebildet, daß er, wenn ein Spurwechselwunsch des Fahrers erkannt ist, automatisch einen Beschleunigungsvorgang einleitet, so daß das Einfädeln in den fließenden Verkehr auf der Nebenspur erleichtert wird. Die bei diesem Beschleunigungsvorgang zu erreichende Zielgeschwindigkeit oder Überholgeschwindigkeit ist dabei nicht nur von der Geschwindigkeit des auf der eigenen Spur vorausfahrenden, zu überholenden Fahrzeugs abhängig, sondern auch von der Geschwindigkeit eines oder mehrerer weiterer Fahrzeuge, die sich vor dem eigenen Fahrzeug auf der Nebenspur befinden. Auf diese Weise wird ein zu dichtes Auffahren auf das Fahrzeug auf der Nebenspur vermieden.

Ein Überholwunsch des Fahrers wird bei dem bekannten System beispielsweise daran erkannt, daß der Fahrer den entsprechenden Fahrtrichtungsanzeiger (Blinker) betätigt. Bei Erkennung des Überholwunsches wird dann unmittelbar der Beschleunigungsvorgang ausgelöst.

In der gleichen Druckschrift wird auch die Möglichkeit erwähnt, beispielsweise mit Hilfe eines Rückraumradars den Nachfolgeverkehr auf der Nebenspur zu überwachen und dem Fahrer, wenn der Nachfolgeverkehr einen Überholvorgang zuläßt, automatisch durch ein geeignetes Signal einen Überholvorgang vorzuschlagen, den der Fahrer dann bestätigen kann oder nicht.

Des weiteren sind auch Spurwechselassistenzsysteme wie z. B. Tote-Winkel-Warnsysteme bekannt, die mit Hilfe der Umfeldsensorik die Nebenspur seitlich des Fahrzeugs und hinter dem Fahrzeug erfassen und den Fahrer bei einem Spurwechsel optisch, akustisch oder haptisch warnen, wenn sich ein Fahrzeug im toten Winkel befindet. Die Ausgabe eines solchen Warnsignals kann für den Fahrer jedoch störend sein, übersehen werden oder vom Fahrer falsch interpretiert werden.

### Vorteile der Erfindung

Die Erfindung mit den in Anspruch 1 angegebenen Merkmalen bietet den Vorteil, daß dem Fahrer der Spurwechsel dadurch weiter erleichtert wird, daß der Spurwechselassistent selbsttätig ein geeignetes Fenster für einen gefahrlosen Wechsel auf die Nebenspur erkennt und anhand dieser Information selbsttätig den günstigsten Zeitpunkt für die Einleitung des Beschleunigungsvorgangs bestimmt.

Bei diesem System können somit die Erkennung des Überholwunsches und die tatsächliche Einleitung des entsprechenden Beschleunigungsvorganges zeitlich auseinander fallen. Wenn beispielsweise der Fahrer durch Setzen des Blinkers einen Überholwunsch zu erkennen gibt, ein gefahrloser Spurwechsel zu diesem Zeitpunkt aber nicht möglich ist, weil sich auf der Nebenspur noch ein überholendes Fahrzeug befindet, das noch keinen ausreichenden Sicherheitsabstand zu dem eigenen Fahrzeug gewonnen hat, so wird durch den erfindungsgemäßen Spurwechselassistenten der Überholwunsch des Fahrers registriert und berücksichtigt, doch erfolgt die Einleitung des Beschleunigungsvorgangs erst zu einem späteren Zeitpunkt, nämlich dann, wenn sich das überholende Fahrzeug mit einem ausreichenden Sicherheitsabstand entfernt hat. Falls diesem überholenden Fahrzeug auf der Nebenspur noch ein weiteres Fahrzeug folgt, und die Lücke oder das "Fenster" zwischen diesen Fahrzeugen zu klein ist, wird der Beschleunigungsvorgang weiter ausgesetzt, bis auch das zweite Fahrzeug seinen Überholvorgang abgeschlossen hat. Auf diese Weise erhält der Fahrer eine sehr wirksame Unterstützung bei der Entscheidung, ob und wann ein gefahrloser Spurwechsel möglich ist. Besonders vorteilhaft ist dabei, daß die beispielsweise durch Radarsensoren gebildete Umfeldsensorik die relevanten Abstände und Relativgeschwindigkeiten wesentlich genauer messen und bewerten kann als dies einem menschlichen Fahrer, insbesondere einem ungeübten Fahrer möglich ist. So wird durch die Erfindung ein erheblicher Beitrag zur Verkehrssicherheit geleistet.

Vorteilhafte Ausgestaltungen und Weiterbildungen der Erfindung sind in den Unteransprüchen angegeben.

Bevorzugt bildet die Einleitung des Beschleunigungsvorgangs durch den Spurwechselassistenten zugleich ein Signal, mit dem dem Fahrer angezeigt wird, daß ein Spurwechsel möglich ist. Dazu kann es zweckmäßig sein, wenn der Beschleunigungsvorgang mit einer gewissen Mindestbeschleunigung einsetzt, die zwar von den Fahrzeuginsassen nicht als unkomfortabel empfunden wird, andererseits jedoch für den Fahrer deutlich spürbar ist, so daß der Fahrer eine erkennbare Rückmeldung erhält. In diesem Fall kann auf die zusätzliche Ausgabe optischer oder akustischer Signale verzichtet werden.

Die Information, die dem Fahrer durch die Einleitung des Beschleunigungsvorgangs vermittelt wird, kann einerseits dazu dienen, einen vom Fahrer beispielsweise durch Setzen des Blinkers signalisierten Überholwunsch zu quittieren. Wenn andererseits der Fahrer den Blinkschalter betätigt und daraufhin der erwartete Beschleunigungsschub ausbleibt, so zeigt dies dem Fahrer an, daß ein Spurwechsel noch nicht möglich ist.

Bekannte Blinkschalter sind in der Regel zweistufig ausgebildet und wirken in der ersten Stufe als Tastschalter ohne Selbsthaltefunktion, während sie in der zweiten Stufe im eingeschalteten Zustand einrasten. Gemäß einer Weiterbildung der Erfindung kann der Blinkschalter so gestaltet sein, daß die Betätigung der ersten Stufe nur dann das Einschalten des Fahrtrichtungsanzeigers bewirkt, wenn ein Spurwechsel tatsächlich möglich ist. Ist der Spurwechsel dagegen nicht möglich, so wird das Blinklicht erst dann wirklich eingeschaltet, wenn sich ein geeignetes Fenster für den Spurwechsel geöffnet hat. Auf diese Weise läßt sich vermeiden, daß der Verkehr auf der Überholspur durch ein vorzeitiges Setzen des Blinkers irritiert wird. Das Aufleuchten der Blink-Kontrolleuchte am Armaturenbrett gibt dem Fahrer dann ein zusätzliches Signal, daß der Spurwechsel möglich ist. Die zweite Stufe des Blinkschalters gibt dem Fahrer die Möglichkeit, diese Funktion zu übersteuern und das Blinklicht sofort einzuschalten.

Andererseits kann der durch den Spurwechselassistenten ausgelöste Beschleunigungsschub auch dazu benutzt werden, dem Fahrer einen Überholvorgang vorzuschlagen. Wenn eine Überholspur vorhanden ist und wenn die Geschwindigkeit eines auf der eigenen Spur vorausfahrenden Fahrzeugs kleiner ist als die vom Fahrer gewählte Wunschgeschwindigkeit, so ist generell ein Überholwunsch des Fahrers zu unterstellen. Wenn dann der Spurwechselassistent ein Fenster für den Spurwechsel erkennt, wird dem Fahrer durch die einsetzende Beschleunigung signalisiert, daß er nun den Überholvorgang einleiten kann. Der Fahrer kann dies dann seinerseits durch Setzen des Blinkers bestätigen. Bleibt die Bestätigung innerhalb eines geeigneten Zeitintervalls aus, so wird der Beschleunigungsvorgang abgebrochen und die Abstandsregelung auf das vordere Fahrzeug wieder aufgenommen.

Wahlweise oder ergänzend können für die Erkennung des Spurwechselwunsches des Fahrers auch andere Kriterien herangezogen werden, beispielsweise Lenkbewegungen und dergleichen.

Für eine zuverlässige Erkennung des Fensters für einen Spurwechsel sollte die Umfeldsensorik in der Lage sein, nicht nur den Verkehr im Rückraum auf der Nebenspur zu überwachen, sondern auch Fahrzeuge zu erkennen, die sich mit dem eigenen Fahrzeug auf annähernd gleicher Höhe befinden. Während für die Überwachung des Rückraums im allgemeinen ein Radarsensor zweckmäßig sein wird, der auch die Messung von Relativgeschwindigkeiten gestattet, bietet sich für die Überwachung des Raums neben dem eigenen Fahrzeug ein Nahbereichssensor, z. B. ein Nahbereichsradar, ein kurzreichweitiges Lidar-System, ein Videosystem oder auch der Einsatz von Ultraschallsensoren an. Die mit solchen Sensoren nicht direkt meßbare Geschwindigkeit des auf gleicher Höhe fahrenden Fahrzeugs kann bei überholenden Fahrzeugen durch Extrapolation der zuvor mit Hilfe des Rückraumradars gemessenen Geschwindigkeit abgeschätzt werden.

Die Umfeldsensorik kann je nach dem, ob das Fahrzeug in einem Land mit Rechtsverkehr oder mit Linksverkehr eingesetzt wird, für die Überwachung einer der beiden Fahrzeugseiten oder auch für die Überwachung beider Fahrzeugseiten ausgebildet sein. Im letzteren Fall kann das System den Fahrer auch bei der Rückkehr auf die langsamere Fahrspur unterstützen.

Die Überwachung des Verkehrs auf der Nebenspur kann permanent oder nur bei erkanntem oder anzunehmendem Spurwechselwunsch des Fahrers erfolgen.

Für die Erkennung eines geeigneten Spurwechselfensters sind die folgenden Kriterien maßgebend: die Abstände der Fahrzeuge, die Größen der Lücken, d. h., der räumlichen Fenster zwischen den Fahrzeugen auf der Nebenspur, und die Relativgeschwindigkeiten der Fahrzeuge auf der Nebenspur und damit die Relativgeschwindigkeiten der Lücken. Zu berücksichtigen sind weiterhin die Sicherheitsabstände zwischen den einzelnen Fahrzeugen, das Beschleunigungsvermögen des eigenen Fahrzeugs und gegebenenfalls ein Grenzwert für eine gewisse Verzögerung, die einem nachfolgenden Fahrzeug "zugemutet" werden kann. Bei den Sicherheitsabständen ist zu unterscheiden zwischen den regulären Sicherheitsabständen oder Zeitlücken bei länger dauernder Kolonnenfahrt und kleineren Mindestabständen, die auch kurzfristig nicht unterschritten werden dürfen. Hinsichtlich des Beschleunigungsvermögens des eigenen Fahrzeugs sind gegebenenfalls auch Beschränkungen zu berücksichtigen, die sich aus Komfortgesichtspunkten, der Zuladung und dergleichen ergeben können.

Bei der Erkennung und Auswahl eines Fensters für den Spurwechsel kann man beispielsweise wie folgt vorgehen. Zunächst wird anhand des Nahbereichssensors geprüft, ob sich auf der Nebenspur ein Fahrzeug etwa auf gleicher Höhe befindet. Wenn dies nicht der Fall ist, wird geprüft, ob die Lücke zwischen dem unmittelbar vorausfahrenden Fahrzeug auf der Nebenspur und dem unmittelbar nachfolgenden Fahrzeug auf der Nebenspur groß genug ist, um ein Einscheren unter Berücksichtigung der Sicherheitsabstände (Mindestabstände) zu gestatten. Bei Nutzfahrzeugen oder Gespannen ist hier gegebenenfalls auch die Länge des eigenen Fahrzeugs zu berücksichtigen. Wenn die Lücke groß genug ist, wird anhand der Relativgeschwindigkeiten geprüft, ob es möglich ist, das eigene Fahrzeug so weit zu beschleunigen, daß das nachfolgende Fahrzeug auf der Nebenspur nach dem Spurwechsel einen ausreichenden Sicherheitsabstand zum eigenen Fahrzeug einhalten kann.

Diese Bedingung wird vorzugsweise als nicht erfüllt angesehen, wenn der Abstand des nachfolgenden Fahrzeugs zum aktuellen Zeitpunkt bereits kleiner ist als der Mindestabstand. Zwar wäre es theoretisch denkbar, das eigene Fahrzeug zunächst vor dem Spurwechsel zu beschleunigen, um den Mindestabstand herzustellen, doch besteht dabei die Gefahr, daß der Mindestabstand zu dem zu überholenden Fahrzeug unterschritten wird und es für den Fahrer schwierig ist, den richtigen Zeitpunkt für den Spurwechsel abzupassen. Aus Sicherheitsgründen sollte deshalb von dieser Möglichkeit kein Gebrauch gemacht werden.

Wenn sich anhand dieser Kriterien ergibt, daß ein sicherer Spurwechsel nicht möglich ist, werden auf analoge Weise nacheinander, nach rückwärts fortschreitend, die Lücken zwischen den nachfolgenden Fahrzeugen auf der Nebenspur untersucht. Wenn eine geeignete Lücke gefunden ist, läßt sich aus der Länge dieser Lücke, den Abständen und Relativgeschwindigkeiten ein Zeitfenster bestimmen, innerhalb dessen der Spurwechsel möglich ist. Die Grenzen dieses Zeitfensters bilden dann die Grundlage für die Bestimmung des Zeitpunkts, zu dem der Beschleunigungsvorgang eingeleitet wird.

Für die Berechnung einer geeigneten Beschleunigungsstrategie sind dann die folgenden, wechselseitig voneinander abhängigen Parameter zu bestimmen: der Zeitpunkt des Beschleunigungsbeginns, die am Ende des Beschleunigungsvorgangs zu erreichende Zielgeschwindigkeit und die Größe der Beschleunigung des eigenen Fahrzeugs. Diese Größe kann im einfachsten Fall konstant, im allgemeinen jedoch auch zeitabhängig sein.

Für die Festlegung und Berechnung dieser Parameter sind verschiedene Algorithmen denkbar. Ein Ansatz besteht darin, daß man zunächst unter Berücksichtigung des Beschleunigungsvermögens des eigenen Fahrzeugs und unter Komfortgesichtspunkten einen geeigneten Wert für die Beschleunigung sowie einen geeigneten Wert für die Zielgeschwindigkeit festlegt, die bis zum spätestmöglichen Spurwechselzeitpunkt erreicht werden soll, und dann anhand dieser Größen den Zeitpunkt für den Beginn der Beschleunigung berechnet. Die Zielgeschwindigkeit kann dabei je nach Situation die Geschwindigkeit des vorausfahrenden Fahrzeugs auf der Nebenspur, die Geschwindigkeit des nachfolgenden Fahrzeugs auf der Nebenspur oder ein geeigneter Kompromiß zwischen beiden sein. Um den Überholvorgang abzukürzen, kann dabei auch eine moderate und zeitlich begrenzte Überschreitung der vom Fahrer gewählten Wunschgeschwindigkeit zugelassen werden. Eine Steigerung des Komforts läßt sich dadurch erreichen, daß man bei der Festlegung der Beschleunigung, abgesehen von dem erwähnten Beschleunigungsschub, durch den dem Fahrer die Überholmöglichkeit signalisiert wird, nur eine allmähliche Zu- und Abnahme der Beschleunigung mit begrenzter Änderungsrate vorsieht.

Ein alternativer Ansatz besteht darin, daß für den Abstand des Fahrzeugs, das das vordere Ende der Einscherlücke markiert, und/oder für den Abstand des Fahrzeugs, das das hintere Ende dieser Lücke markiert, eine optimale, durch möglichst geringe Beschleunigungen gekennzeichnete Weg/Zeit-Kurve festgelegt und dann der Beschleunigungsverlauf aus dieser Kurve abgeleitet wird.

Schließlich ist unter Berücksichtigung des Abstands und der Relativgeschwindigkeit des zu überholenden Fahrzeugs ein geeignetes Abbruchkriterium für den Fall festzulegen, daß der Fahrer, nachdem der Beschleunigungsvorgang eingeleitet wurde, den Spurwechselwunsch nicht durch Setzen des Blinkers, durch entsprechende Lenkaktionen oder dergleichen bestätigt und/oder den Spurwechselvorgang nicht durch eine entsprechende Lenkaktion einleitet. In diesem Fall ist der Beschleunigungsvorgang so rechtzeitig abzubrechen, daß die normale Abstandsregelung ohne Unterschreitung des Mindestabstands und ohne unkomfortabel große Fahrzeugverzögerungen wieder abgebrochen werden kann. Zweckmäßig erfolgt die Bestimmung dieses Abbrechkriteriums durch Berechnung eines Abbruchzeitpunkts, bis zu dem der Fahrer den Spurwechselwunsch bestätigt bzw. ausgeführt haben muß.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm eines Geschwindigkeitsregelsystems mit einem erfindungsgemäßen Spurwechselassistenten;
- Figur 2: eine Skizze einer Verkehrssituation zur Erläuterung der Funktionsweise des Spurwechselassistenten;
- Figur 3: ein Weg/Zeit-Diagramm zu Figur 2;
- Figur 4: eine Skizze einer anderen Verkehrssituation;
- Figur 5: ein Weg/Zeit-Diagramm zu Figur 4;
- Figur 6: eine Skizze einer weiteren Verkehrssituation; und
- Figuren 7 bis 9: Weg/Zeit-Diagramme zu Figur 6.

### Beschreibung des Ausführungsbeispiels

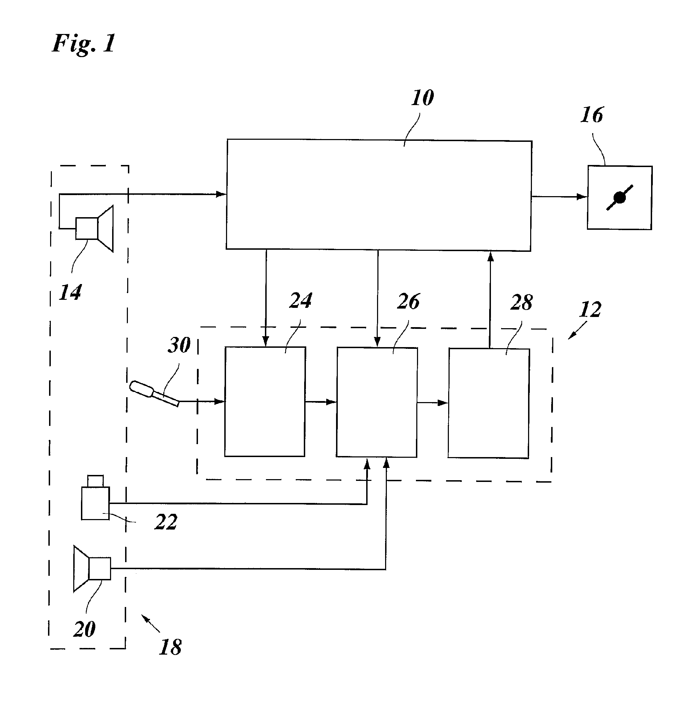

Figur 1 zeigt als vereinfachtes Blockdiagramm ein Geschwindigkeitsregelsystem 10 für ein Kraftfahrzeug sowie einen zugehörigen Spurwechselassistenten 12. Das Geschwindigkeitsregelsystem 10 erhält Signale von einem Frontradar 14 und greift in das Antriebssystem 16 sowie erforderlichenfalls auch in das nicht gezeigte Bremssystem des Fahrzeugs ein. Die Funktionen des Geschwindigkeitsregelsystems 10 entsprechen denen eines bekannten ACC-Systems und werden deshalb hier nicht näher erläutert.

Das Frontradar 14 ist Teil einer Umfeldsensorik 18, zu der außerdem noch ein Rückraumradar 20 und ein Nahbereichssensor 22 gehören.

Der Spurwechselassistent 12 wird hier durch drei Funktionsblöcke repräsentiert, nämlich eine Entscheidungseinrichtung 24 zur Entscheidung, ob ein Spurwechselwunsch des Fahrers anzunehmen ist, eine Erkennungseinrichtung 26 zur Erkennung eines geeigneten Spurwechselfensters im fließenden Verkehr auf der Nebenspur und eine Berechnungseinrichtung 28 zur Berechnung einer Beschleunigungsstrategie und zur Ausgabe eines entsprechenden Beschleunigungsbefehls an das Geschwindigkeitsregelsystem 10. In der Praxis können die genannten Funktionsblöcke des Spurwechselassistenten 12 und das Geschwindigkeitsregelsystems 10 durch Programm-Module gebildet werden, die auf einem Mikrorechner oder einem Netzwerk von Mikrorechnern laufen.

Im gezeigten Beispiel soll angenommen werden, daß die Entscheidungseinrichtung 24 einen Spurwechselwunsch des Fahrers annimmt, wenn eine Überholspur vorhanden ist und wenn die Absolutgeschwindigkeit des mit dem Frontradar 14 georteten, auf der eigenen Fahrspur unmittelbar vorausfahrenden Fahrzeugs kleiner ist als die vom Fahrer gewählte Wunschgeschwindigkeit für die Geschwindigkeitsregelung. Diese Informationen werden der Entscheidungseinrichtung 24 vom Geschwindigkeitsregelsystem 10 bereitgestellt. Das Vorhandensein einer Überholspur ist beispielsweise daran zu erkennen, daß das winkelauflösende Frontradar 14 gelegentlich Fahrzeuge auf der linken Nebenspur (bei Rechtsverkehr) ortet. Weiterhin erhält die Entscheidungseinrichtung 24 von einem Blinkschalter 30 ein Signal, das das Setzen des linken Blinkers anzeigt. Dieses Signal dient in dem hier betrachteten Beispiel zur Bestätigung des Spurwechselwunsches des Fahrers.

Wenn die Entscheidungseinrichtung 24 entscheidet, daß ein Spurwechselwunsch des Fahrers anzunehmen ist, so veranlaßt sie die Erkennungseinrichtung 26, mit Hilfe des Rückraumradars 20 und des Nahbereichssensors 22 den Verkehr auf der Nebenspur hinter und neben dem eigenen Fahrzeug zu überwachen und nach geeigneten Einscherlücken zu suchen. Wenn eine Einscherlücke gefunden ist, werden die entsprechenden Abstands- und Geschwindigkeitsdaten an die Befehlseinrichtung 28 übermittelt, die eine Beschleunigungsstrategie für das Einfädeln in den fließenden Verkehr auf der Nebenspur festlegt und entsprechende Beschleunigungsbefehle an das Geschwindigkeitsregelsystem 10 ausgibt.

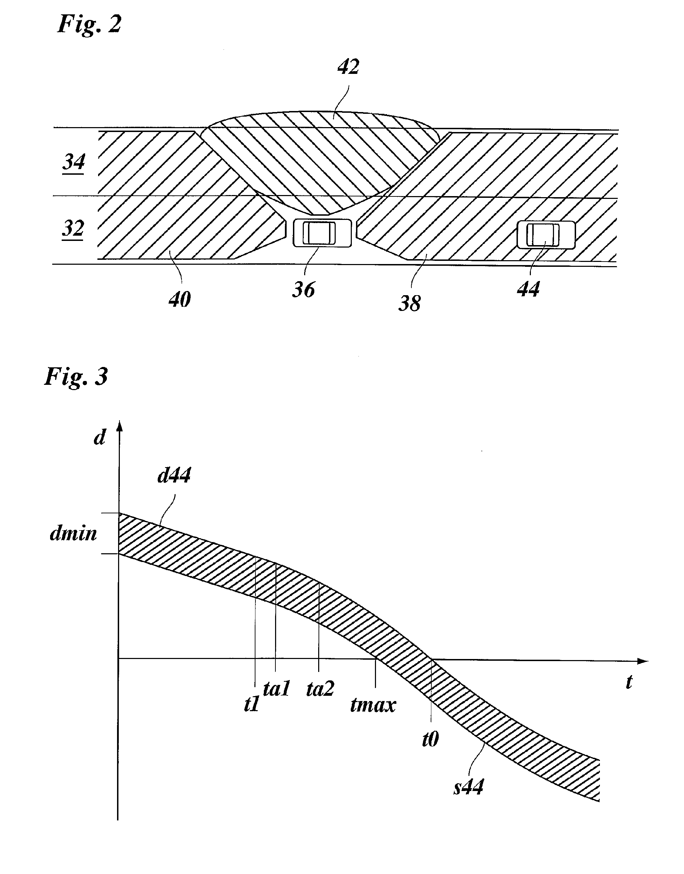

In Figur 2 ist in der Draufsicht eine zweispurige Fahrbahn mit einer rechten Spur 32 und einer linken Nebenspur 34 (Überholspur) dargestellt. Auf der rechten Spur 32 fährt ein Fahrzeug 36, das mit dem System nach Figur 1 ausgerüstet ist. Als schraffierte Flächen sind der Ortungsbereich 38 des Frontradars 14, der Ortungsbereich 40 des Rückraumradars 20 und der Ortungsbereich 32 des Nahbereichsensors 22 dargestellt. Das Frontradar überwacht den Verkehr auf beiden Spuren 32, 34 vor dem Fahrzeug 36, während das Rückraumradar den Verkehr auf der Nebenspur 34 hinter dem Fahrzeug 36 überwacht. Der Ortungsbereich 40 des Rückraumradars erfaßt zwar auch die rechte Spur 32, doch ist das Rückraumradar aufgrund seines Winkelauflösungsvermögens in der Lage, zwischen den beiden Spuren zu unterscheiden, und Fahrzeuge auf der rechten Spur 32 werden ignoriert. Der Ortungsbereich 42 des Nahbereichssensors schließt die Lücke zwischen den Ortungsbereichen 38 und 40, so daß der Verkehr auf der Nebenspur 34 lükkenlos überwacht werden kann.

In der in Figur 2 gezeigten Situation ist die Nebenspur 34 frei, und vor dem Fahrzeug 36 fährt ein langsameres Fahrzeug 44.

In Figur 3 ist der Fahrzeugabstand d gegen die Zeit t aufgetragen. Die Kurve d44 gibt den zeitlichen Verlauf des Abstands des Fahrzeugs 44 an, der mit dem Frontradar 14 gemessen wird. Die Kurve s44 in Figur 3 unterscheidet sich von der Kurve d44 durch einen Mindest-Sicherheitsabstand dmin, den das Fahrzeug 36 zum Fahrzeug 44 einhalten sollte.

Zunächst, bis zum Zeitpunkt t1, fahren beide Fahrzeuge 36, 44 mit konstanter Geschwindigkeit, und dementsprechend fällt die Kurve d44 linear ab. Das Fahrzeug 36 fährt mit der vom Fahrer gewählten Wunschgeschwindigkeit. Da das Fahrzeug 44 langsamer ist, entscheidet die Entscheidungseinrichtung 24, daß ein Überholwunsch und damit ein Spurwechselwunsch des Fahrers zu unterstellen ist. Die Erkennungseinrichtung 26 sucht daraufhin nach einem Einscherfenster auf der Nebenspur 34, und da diese Spur frei ist, ist das Einscherfenster unendlich ausgedehnt. Für die Durchführung des Spurwechsels hat der Fahrer des Fahrzeugs 36 daher einen sehr großen zeitlichen Spielraum.

Wenn der Fahrer keinen Spurwechsel macht, würde zu einem Zeitpunkt ta1 das ACC-System aktiv werden und eine Verzögerung des Fahrzeugs 36 veranlassen, damit das Fahrzeug 44 mit einer angemessen großen Zeitlücke verfolgt wird. In dieser Situation bestimmt die Befehlseinrichtung 28 zu einem Zeitpunkt t1, der kurz vor dem Zeitpunkt ta liegt, die Ausgabe eines Beschleunigungsbefehls. Das Fahrzeug 36 wird beschleunigt, während das Fahrzeug 44 mit konstanter Geschwindigkeit weiter fährt. In Figur 3 äußert sich dies darin, daß die Kurven d44 und s44 von t1 an nach unten abbiegen. Die bei t1 einsetzende Beschleunigung ist für den Fahrer des Fahrzeugs 36 spürbar und stellt für ihn ein Signal oder eine Aufforderung dar, einen Überholvorgang einzuleiten und die Fahrspur zu wechseln.

Im Zeitintervall zwischen t1 und ta1 bestätigt der Fahrer diese Aufforderung durch Betätigung des Blinkschalters 30. Wenn diese Bestätigung nicht spätestens bis zum Zeitpunkt ta1 erfolgt, so würde die Befehlseinrichtung 28 den Beschleunigungsvorgang abbrechen, und das Geschwindigkeitsregelsystem würde zur normalen Abstandsregelung zurückkehren.

Das Lenkmanöver für den eigentlichen Spurwechsel bleibt dem Fahrer überlassen. Falls der Fahrer den Spurwechsel nicht vornimmt, würde zum Zeitpunkt tmax der Mindestabstand dmin zum Fahrzeug 44 unterschritten. Um dies zu vermeiden, wird der Beschleunigungsvorgang schon zu einem geeignet berechneten früheren Zeitpunkt ta2 abgebrochen, wenn der Fahrer den Spurwechsel bis dahin nicht durchgeführt hat.

Im gezeigten Beispiel wird der Überholwunsch bestätigt und umgesetzt, so daß der Beschleunigungsvorgang fortgesetzt wird. Zum Zeitpunkt t0 wird das Fahrzeug 44 mit einer Geschwindigkeit überholt, die - wegen des Beschleunigungsvorgangs - leicht über der ursprünglich vom Fahrer gewählten Wunschgeschwindigkeit liegt. Danach veranlaßt die Befehlseinrichtung 28 eine Verzögerung des Fahrzeugs, bis es wieder auf die Wunschgeschwindigkeit zurückgefallen ist.

Der von der Befehlseinrichtung 28 veranlaßte Beschleunigungsvorgang wäre in dieser Situation zum Überholen nicht notwendig, da das Fahrzeug 36 ohnehin schneller ist als das Fahrzeug 44. Dieser Beschleunigungsvorgang erfüllt jedoch im Rahmen der Erfindung eine zweifache Funktion. Zum einen dient er als Spurwechselaufforderung für den Fahrer, und zum anderen beschleunigt und verkürzt er den Überholvorgang. Dies ist z.B. vorteilhaft in den Fällen, in denen sich auf der Überholspur rasch ein vom Rückraumradar noch nicht geortetes Fahrzeug annähert, oder in den Fällen, in denen sich vor dem Fahrzeug 44 auf der Spur 32 ein noch langsameres Fahrzeug befindet, das den Fahrer den Fahrzeugs 44 zwingt, entweder zu bremsen oder seinerseits einen Überholvorgang einzuleiten.

Die Festlegung, daß der Beschleunigungsbefehl zum Zeitpunkt t1 ausgegeben wird, also kurz vor dem Zeitpunkt, an dem die ACC-Abstandsregelung einsetzen würde, hat den Vorteil, daß ein konsistentes, ruhiges Fahrverhalten erreicht wird und das Fahrzeug 36 nicht zunächst verzögert und dann doch wieder für den Überholvorgang beschleunigt wird.

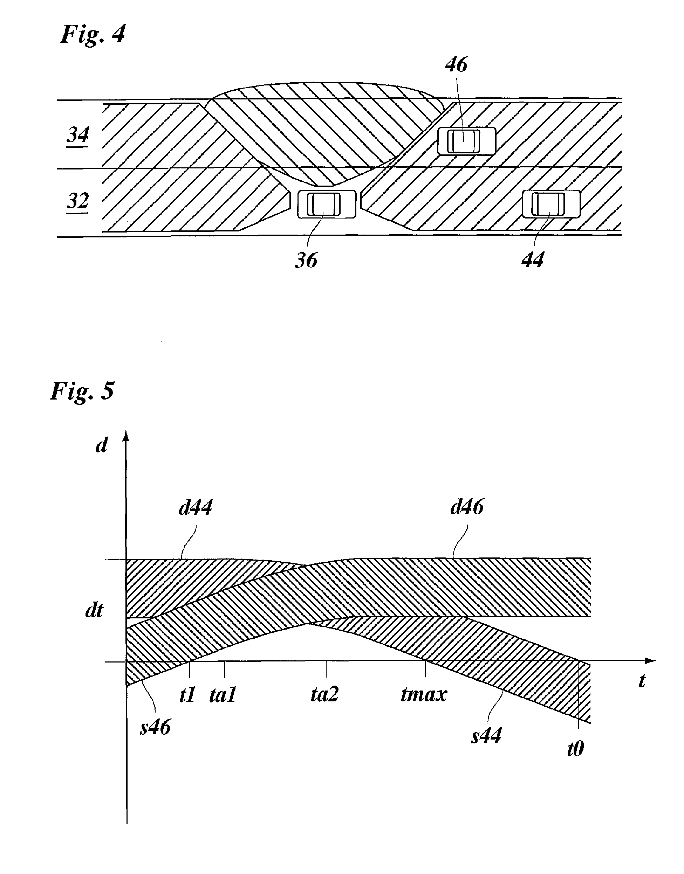

Figuren 4 und 5 illustrieren eine modifizierte Verkehrssituation, in der vor dem Fahrzeug 36 auf der Nebenspur 34 ein weiteres Fahrzeug 46 fährt, das vom Frontradar 14 geortet wird. Der Abstand des Fahrzeugs 46 ist in Figur 5 durch die Kurve d46 repräsentiert, und die Kurve s46 repräsentiert den entsprechenden Mindestabstand.

In dem Zeitraum, der der in Figur 4 gezeigten Situation vorangeht, wurde das Fahrzeug 46 zunächst vom Rückraumradar 20 und dann vom Nahbereichssensor 22 geortet. Die Erkennungseinrichtung 26 hat erkannt, daß die Nebenspur 34 nicht frei ist, und deshalb wurde keine Spurwechselaufforderung ausgegeben. Statt dessen hat das Geschwindigkeitsregelsystem 10 die Geschwindigkeit des Fahrzeugs 36 auf die Geschwindigkeit des Fahrzeugs 44 reduziert. In Figur 5 erkennt man dies daran, daß die Kurve d44 zunächst waagerecht verläuft. Das Fahrzeug 44 wird vom Fahrzeug 36 in einem konstanten Abstand dt verfolgt, der der im ACC-System eingestellten Sollzeitlücke entspricht. Dieser Abstand ist größer als dmin.

Zum Zeitpunkt t1 in Figur 5 wird der Abstand des Fahrzeugs 46 größer als der Mindestabstand dmin. Frühestens zu diesem Zeitpunkt t1 kann das Fahrzeug 36 auf die Nebenspur 34 wechseln, ohne daß der Mindestabstand zum Fahrzeug 46 unterschritten wird. Die Befehlseinrichtung 28 ist deshalb im gezeigten Beispiel so ausgelegt, daß in dieser Situation erst zum Zeitpunkt t1 der Beschleunigungsbefehl und damit die Spurwechselaufforderung ausgegeben wird. So wird der Fahrer nicht dazu verleitet, vorzeitig auf die Nebenspur zu wechseln.

Das Fahrzeug 36 wird nun beschleunigt, entweder auf die vom Fahrer gewählte Wunschgeschwindigkeit oder, wenn wie im gezeigten Beispiel die Geschwindigkeit des Fahrzeugs 46 kleiner ist, auf die Geschwindigkeit des Fahrzeugs 46, das dann, nachdem der Fahrer den Spurwechsel vorgenommen hat, auf der Nebenspur 34 im Abstand dt verfolgt wird. Das Zeitfenster, das dem Fahrer für den Spurwechsel zur Verfügung steht, ist in diesem Fall begrenzt durch die Zeitpunkte t1 und ta2. Bei t0 wird schließlich das Fahrzeug 44 überholt.

Wie im zuvor beschriebenen Fall wird wieder durch den Spurwechselassistenten ein Abbruchzeitpunkt ta1 festgelegt, bis zu dem der Fahrer die Spurwechselaufforderung quittiert haben muß.

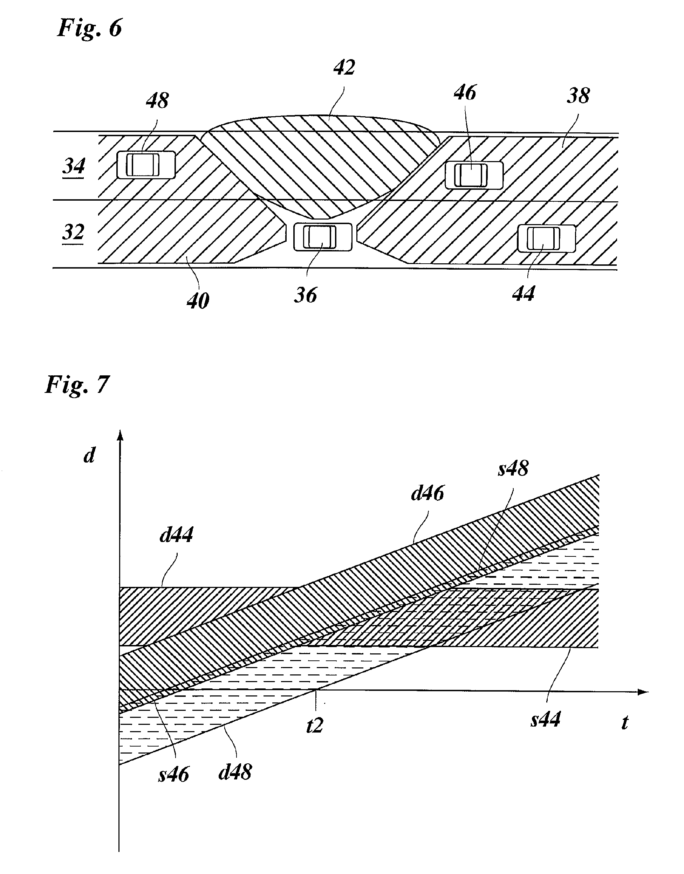

Figuren 6 und 7 zeigen eine weitere Verkehrssituation, die sich von der Situation nach Figuren 4 und 5 dadurch unterscheidet, daß auf der Nebenspur 34 hinter dem Fahrzeug 46 noch ein weiteres Fahrzeug 48 folgt, das vom Rückraumradar 20 des Fahrzeugs 36 geortet wird. Der vom Rückraumradar gemessene Abstand des Fahrzeugs 48 ist in Figur 7 durch die Kurve d48 angegeben. Die Kurve s48 repräsentiert den zugehörigen Mindestabstand zwischen den Fahrzeugen 48 und 36. Die Fahrzeuge 46 und 48 fahren mit gleicher Geschwindigkeit, und ihr gegenseitiger Abstand ist kleiner als die Summe der Mindestabstände dmin, so daß in Figur 7 die "verbotenen Zonen", die durch die Kurven d46 und s46 einerseits und die Kurven d48 und s48 andererseits begrenzt werden, einander überlappen. Die Erkennungseinrichtung 26 stellt somit fest, daß zwischen den Fahrzeugen 46 und 48 kein Fenster für einen sicheren Spurwechsel offen ist. Dementsprechend unterbleibt der Beschleunigungsbefehl, und sämtliche Fahrzeuge setzen ihre Fahrt mit konstanter Geschwindigkeit fort. Frühestens zum Zeitpunkt t2 könnte ein Beschleunigungsbefehl ausgegeben werden, falls auf das Fahrzeug 48 nicht noch ein weiteres Fahrzeug folgt.

Wenn das Fahrzeug 48 den Ortungsbereich 40 des Rückraumradars verläßt, tritt es in den Ortungsbereich 42 des Nahbereichssensors ein, und auch in diesem Fall erkennt die Erkennungseinrichtung 26, daß das Spurwechselfenster weiterhin geschlossen ist. Zum Zeitpunkt t2 befindet sich das Fahrzeug 48 bereits im Ortungsbereich 38 des Frontradars, so daß seine Relativgeschwindigkeit gemessen werden kann.

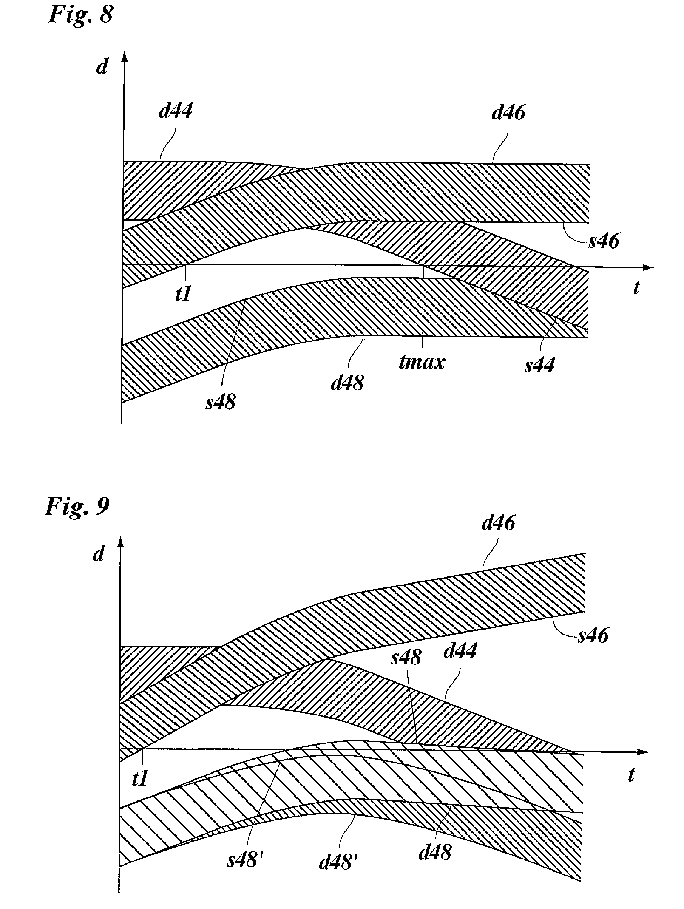

Figur 8 illustriert eine ähnliche Situation wie Figur 7, nur mit dem Unterschied, daß nun der Abstand zwischen den Fahrzeugen 46 und 48 größer ist, so daß sich zwischen den Kurven s46 und s48 ein Fenster für einen gefahrlosen Spurwechsel auftut. Dementsprechend wird bei t1 der Beschleunigungsbefehl durch die Befehlseinrichtung 28 ausgegeben. Die Zielgeschwindigkeit, auf die das Fahrzeug 36 beschleunigt wird, ist in diesem Fall gleich der übereinstimmenden Geschwindigkeit der Fahrzeuge 46 und 48. Die Größe der Beschleunigung wird durch die Befehlseinrichtung 28 innerhalb fest vorgegebener Komfortgrenzen so groß gewählt, daß der Abstand zwischen den Fahrzeugen 36 und 48 zu keinem Zeitpunkt kleiner wird als dmin, d.h., daß die Kurve s48 die t-Achse nicht erreicht. So ist sichergestellt, daß ein ausreichender Mindestabstand zum Fahrzeug 48 eingehalten wird, ohne daß das Fahrzeug 48 seine Geschwindigkeit verringern muß, unabhängig davon, zu welchem Zeitpunkt innerhalb des Fensters der Fahrer den Spurwechsel vornimmt.

Figur 9 illustriert eine Situation, die sich von der Situation nach Figur 8 dadurch unterscheidet, daß das Fahrzeug 46 eine höhere Geschwindigkeit hat, die größer ist als die Wunschgeschwindigkeit für das Fahrzeug 36. Die Geschwindigkeit des Fahrzeugs 48 ist etwas kleiner als die Wunschgeschwindigkeit, so daß sich der Abstand zwischen den Fahrzeugen 48 und 36 (Kurve d48) am Ende des Beschleunigungsvorgangs wieder vergrößert. Zum Zeitpunkt t1, zu dem der Beschleunigungsbefehl ausgegeben wird, ist jedoch das Fahrzeug 48 bereits so nahe an das Fahrzeug 36 herangekommen, daß der Abstand zwischen den Fahrzeugen 48 und 36 auch bei maximal möglicher oder zugelassener Beschleunigung des Fahrzeugs 36 den Mindestabstand unterschreitet. In Figur 9 ist dies daran zu erkennen, daß die Kurve s48 vorübergehend über die t-Achse hinaus ansteigt. Das heißt, wenn der Fahrer des Fahrzeugs 48 seine Fahrt mit unverminderter Geschwindigkeit fortsetzt, wird der Mindestabstand vorübergehend unterschritten. Der Fahrer des Fahrzeugs 48 ist somit gezwungen, seinerseits das Fahrzeugs zu verzögern, um den Mindestabstand einzuhalten. Dies wird in Figur 9 durch die Kurven d48' und s48' symbolisiert.

Diese Situation wird im beschriebenen Ausführungsbeispiel unter der Bedingung zugelassen, daß die erzwungene Verzögerung des Fahrzeugs 48 unterhalb eines bestimmten Beschleunigungs- bzw. Verzögerungsgrenzwertes bleibt. Dieser Grenzwert ist so gewählt, daß der Fahrer des Fahrzeugs 48 nicht über Gebühr behindert und jedenfalls nicht gefährdet wird und sollte auch so gewählt sein, daß die nötige Verzögerung des Fahrzeugs 48 kleiner ist als die typische Motorbremswirkung eines Fahrzeugs, so daß der Fahrer des Fahrzeugs 48 nicht gezwungen wird, aktiv zu bremsen.

Sofern das Beschleunigungsvermögen des Fahrzeugs 36 dies zuläßt, kann die geringfügige Behinderung des Fahrzuegs 48 auch dadurch vermieden werden, daß die Komfortgrenze für die Beschleunigung des Fahrzeugs 36 erhöht wird.

Eine vergleichbare Situation, in der es zu einer Unterschreitung des Mindestabstands kommen kann, selbst wenn das Beschleunigungsvermögen des Fahrzeugs 36 ausreicht, ergibt sich dann, wenn die Wunschgeschwindigkeit für das Fahrzeug 36 kleiner ist als die Geschwindigkeit des Fahrzeugs 48. Auch in diesem Fall ist der Fahrer des Fahrzeugs 48 letztlich gezwungen, seine Geschwindigkeit zu verringern. Eine mögliche Gegenmaßnahme besteht dann darin, daß die Zielgeschwindigkeit für das Fahrzeug 36 vorübergehend über die Wunschgeschwindigkeit erhöht wird, um dem Fahrer des Fahrzeugs 48 mehr Zeit zur Geschwindigkeitsanpassung zu geben.

Im allgemeinen wird man für die Beschleunigung des Fahrzeugs 36 bei dem durch die Befehlseinrichtung 38 ausgelösten Beschleunigungsvorgang unter Komfortgesichtspunkten einen Grenzwert wählen, der das tatsächliche Beschleunigungsvermögen des Fahrzeugs nicht ausschöpft. Dieser Grenzwert kann jedoch situationsabhängig variieren. Beispielsweise kann man größere Beschleunigungen zulassen, wenn die Diskrepanz zwischen der Geschwindigkeit des vorausfahrenden Fahrzeugs 44 und der Wunschgeschwindigkeit sehr groß ist. Ebenso ist es denkbar, daß bei hoher Verkehrsdichte die Beschleunigungsgrenze erhöht wird, damit die Wahrscheinlichkeit steigt, ein geeignetes Fenster für einen gefahrlosen Spurwechsel zu finden.

Während in den in Figuren 8 und 9 gezeigten Situationen der Zeitpunkt t1, zu dem der Beschleunigungsbefehl ausgegeben wird, jeweils so gewählt wird, daß er mit dem Zeitpunkt zusammenfällt, an dem das vordere Fahrzeug 46 auf der Nebenspur den Mindestabstand dmin erreicht hat (Schnittpunkt der Kurve s46 mit der t-Achse), kann in einer modifizierten Ausführungsform der Beschleunigungsbefehl auch schon zu einem früheren Zeitpunkt ausgegeben werden. Auch hierdurch vergrößert sich die Chance, ein geeignetes Spurwechselfenster zu finden. Allerdings ist dabei zu berücksichtigen, daß dann auch der Zeitpunkt tmax früher erreicht wird und daß im Fall eines Abbruchs des Beschleunigungsvorgangs eine ausreichende Verzögerungsstrecke verbleiben muß, ohne daß das Fahrzeug 36 zu dicht auf das Vorderfahrzeug 44 auffährt. Bei hoher Verkehrsdichte kann es deshalb zweckmäßig sein, im Rahmen der normalen ACC-Regelung die Zeitlücke, die den Abstand dt bestimmt, zu vergrößern, so daß für den Beschleunigungs- und Spurwechselvorgang eine größere "Anlaufstrekke" zur Verfügung steht.

## Patentansprüche

1. Spurwechselasistent für Kraftfahreuge (36) mit einem Geschwindigkeitsregelsystem (10) und einer Umfeldsensorik (18) zur Erfassung des Verkehrsumfelds einschließlich des Verkehrs auf einer Nebenspur (34), mit einer Entscheidungseinrichtung (24) zur Entscheidung, ob ein Spurwechselwunsch des Fahrers anzunehmen ist, und einer Befehlseinrichtung (28), die im Falle eines Spurwechselwunsches einen Beschleunigungsbefehl an das Geschwindigkeitsregelsystem ausgibt, **dadurch gekennzeichnet, daß** eine Erkennungseinrichtung (26) dazu ausgebildet ist, anhand der Daten der Umfeldsensorik (18) ein Fenster für ein gefahrloses Einscheren auf die Nebenspur (34) zu erkennen, und daß die Befehlseinrichtung (28) dazu ausgebildet ist, eine an das Fenster angepaßte Beschleunigungsstrategie einschließlich eines Zeitpunkts (t1) für den Beschleunigungsbeginn zu berechnen.

2. Spurwechselassistent nach Anspruch 1, **dadurch gekennzeichnet, daß** die Befehlseinrichtung (28) dazu ausgebildet ist, bei Ausgabe des Beschleunigungsbefehls ein Spurwechselsignal in der Form einer spürbaren Anfangsbeschleunigung an den Fahrer zu übermitteln.

3. Spurwechselassistent nach Anspruch 2, **dadurch gekennzeichnet, daß** das Spurwechselsignal ein Signal ist, mit dem ein durch den Fahrer signalisierter Spurwechselwunsch quittiert wird.

4. Spurwechselassistent nach Anspruch 2, **dadurch gekennzeichnet, daß** das Spurwechselsignal eine Spurwechselaufforderung ist und daß die Befehlseinrichtung (28) dazu ausgebildet ist, den Beschleunigungsvorgang abzubrechen, wenn die Spurwechselaufforderung nicht innerhalb einer vorgegebenen Zeitspanne durch eine Aktion des Fahrers bestätigt wird.

5. Spurwechselassistent nach einem der vorstehenden Ansprüche, **dadurch gekennzeichnet, daß** die Erkennungseinrichtung (26) die Eignung der Fenster für das Einscheren auf die Nebenspur (34) in Abhängigkeit von einem Grenzwert für die Beschleunigung des eigenen Fahrzeugs (36) bewertet.

6. Spurwechselassistent nach Anspruch 5, **dadurch gekennzeichnet, daß** die Erkennungseinrichtung (26) dazu ausgebildet ist, den Grenzwert situationsabhängig zu variieren.

7. Spurwechselassistent nach einem der vorstehenden Ansprüche, **dadurch gekennzeichnet, daß** die Erkennungseinrichtung (26) Signaleingänge für zwei Sensoren (20, 22) der Umfeldsensorik (18) aufweist, nämlich für einen Sensor (20) zur Überwachung des Rückraums auf der Nebenspur (34) hinter dem eigenen Fahrzeug und einen Sensor (22) zur Überwachung der Nebenspur in Höhe des eigenen Fahrzeugs.
